# EUROPEAN PATENT APPLICATION

(11) **EP 4 832 329 A1**
(43) Date of publication of application: **28.10.2026**
(21) Application number: 24908203.3
(22) Date of filing: 20.12.2024
(51) Int. Cl.: H02M 3/335, H02M 3/00

(54) **POWER CONVERSION DEVICE**

(30) Priority: 22.12.2023 KR 20230190138; 18.12.2024 KR 20240189384
(71) Applicant: LG Innotek Co., Ltd., Seoul 07796 (KR)
(72) Inventor: YOON, Dong Kwan, Seoul 07796 (KR); YOON, Dong Keun, Seoul 07796 (KR)
(74) Representative: Plasseraud IP
(86) International application number: PCT/KR2024/020904
(87) International publication number: WO 2025/135921

(57) **Abstract**

A power conversion device according to one embodiment of the present invention comprises: a transformation unit which converts power in both directions; a first element unit which is connected to one side of the transformation unit; and a second element unit which is connected to the other side of the transformation unit, wherein the first element unit includes a first inductor, a first capacitor, and a first switching unit which connects or disconnects the first capacitor, and the second element unit includes a second inductor, a second capacitor, and a second switching unit which connects or disconnects the second capacitor.

## Description

### [Technical Fields]

The teachings in accordance with exemplary and non-limiting embodiments of this invention relate generally to a power conversion device, and more particularly to a power conversion device comprising a bidirectional LLC circuit.

### [Background Arts]

With recent industrial advancements and the expanding adoption of renewable energy, active research is underway to achieve higher efficiency and higher power density in power conversion devices.

These power conversion devices are used in various applications, including micro grid systems, energy storage systems (ESS), electric vehicle on-board chargers (OBC), battery charging and discharging systems, and fuel cell power conversion devices, and there is a growing demand for power conversion devices with a wide input and output voltage control range.

Extensive research is being conducted on DC-DC converters-power conversion devices-to improve manufacturing costs, stability, and efficiency, with LLC circuits and CLLLC circuits being among the most commonly used designs. However, CLLLC circuits face the challenge of achieving high voltage gain under wide input-output range conditions.

### [Summary of Invention]

### [Technical Subject]

The technical problem that the present invention seeks to solve is to provide a power conversion device that constitutes a bidirectional LLC circuit.

### [Technical Solution]

To solve the abovementioned technical subject, a power conversion device according to one embodiment of the present invention may comprise: a transformation unit which converts power in both directions; a first element unit which is connected to one side of the transformation unit; and a second element unit which is connected to the other side of the transformation unit, wherein the first element unit includes a first inductor, a first capacitor, and a first switching unit which connects or disconnects the first capacitor, and the second element unit includes a second inductor, a second capacitor, and a second switching unit which connects or disconnects the second capacitor.

Preferably, but not necessarily, when the first switching unit connects the first capacitor, the second switching unit may disconnect the second capacitor.

Preferably, but not necessarily, the first switching unit may connect either the first capacitor or a first bypass path that bypasses the first capacitor.

Preferably, but not necessarily, the second switching unit may connect either the second capacitor or a second bypass path that bypasses the second capacitor.

Preferably, but not necessarily, when the power transformation unit converts power from the one side to the other side direction, the first switching unit may connect the first capacitor, and the second switching unit may disconnect the second capacitor.

Preferably, but not necessarily, when the power transformation unit converts power from the other side to the one side direction, the first switching unit may disconnect the first capacitor, and the second switching unit may connect the second capacitor.

Preferably, but not necessarily, the first inductor may be connected to a (-) terminal on the one side of the transformation unit, and the second inductor may be connected to a (-) terminal on the other side of the transformation unit.

Preferably, but not necessarily, the first element unit may include a first bypass path having one end connected to a (+) terminal on one side of the transformation unit, and the first capacitor may have one end connected to a (+) terminal on one side of the transformation unit and connected in parallel with the first bypass path, wherein the first switching unit has one end connected to either the other end of the first bypass path or the other end of the first capacitor, and the other end may be connected to the first input/output unit.

Preferably, but not necessarily, the first element unit may include a first bypass path, one end of which is connected to a (+) terminal on one side of the transformation unit, and the first capacitor has one end connected to a tap terminal between the (+) and (-) terminals on the one side of the transformation unit, the first switching unit has one end connected to either the other end of the first bypass path or the other end of the first capacitor, and the other end may be connected to the first input/output unit.

Preferably, but not necessarily, the first element unit may include a first bypass path, one end of which is connected to a tap terminal between the (+) terminal and the (-) terminal on one side of the transformation unit, the first capacitor has one end connected to the (+) terminal on the one side of the transformation unit, and the first switching unit has one end connected to either the other end of the first bypass path or the other end of the first capacitor, and the other end may be connected to the first input/output unit.

Preferably, but not necessarily, the first element unit may include a first bypass path, one end of which is connected to the (+) terminal on one side of the transformation unit, and the first capacitor has one end connected to a tap terminal between the (+) and (-) terminals on the one side of the transformation unit, the first switching unit may include a first-1 switching unit, one end of which is connected to the other end of the first bypass path, and a first-2 switching unit, one end of which is connected to the other end of the first capacitor and is connected in parallel with the first-1 switching unit.

Preferably, but not necessarily, the first element unit may include a first bypass path, one end of which is connected to a tap terminal between the (+) terminal and the (-) terminal on one side of the transformation unit, the first capacitor has one end connected to the (+) terminal on the one side of the transformation unit, the first switching unit may include a first-1 switching unit, one end of which is connected to the other end of the first bypass path, and a first-2 switching unit, one end of which is connected to the other end of the first capacitor and is connected in parallel with the first-1 switching unit.

Preferably, but not necessarily, the first capacitor has one end connected to the (+) terminal on one side of the transformation unit, and the other end connected to the first input/output unit, and the first switching unit has one end connected to the (+) terminal on one side of the transformation unit, the other end connected to the first input/output unit, and may be connected in parallel with the first capacitor.

### [Advantageous Effects]

According to embodiments of the present invention, a circuit can be converted into a bidirectional LLC converter by using a relay or a semiconductor switching device to open or short-circuit the resonant capacitor (C). Voltage gain can be increased by removing one of the two resonant capacitors. Furthermore, by adding a terminal in the middle of the transformer winding and using a relay or semiconductor switching device, the transformer's turn ratio can be adjusted according to the operating mode. This allows the turn ratios for the forward and backward directions to be configured differently, thereby optimizing the voltage gain. An optimized bidirectional LLC can be designed by configuring the relay or semiconductor switch device to operate as an LLC circuit according to the direction of power transfer. Furthermore, the bidirectional DC-DC converter can be configured to minimize the size and losses of magnetic components (transformers and inductors).

When the proposed circuit is applied under the same circuit parameter conditions, the voltage gain is higher than that of conventional CLLLCs, enabling designs that satisfy a wide range of input and output conditions. This also suppresses the excessively high magnetizing current that would otherwise be required to accommodate a wide input-output voltage range. Since the circuit can be designed to minimize magnetizing current under the same power conditions, the size and losses of the magnetic components can be minimized, thereby enabling the miniaturization of bidirectional DC-DC converter products and the achievement of high efficiency.

### [Brief Description of Drawings]

FIG. 1 illustrates a power conversion device according to an embodiment of the present invention.
FIGS. 2 through 4 are block diagrams of a power conversion device according to an embodiment of the present invention.
FIG. 5 illustrates a circuit of a power conversion device according to a comparative example of the present invention.
FIG. 6 illustrates an example of a circuit implementation of a power conversion device according to an embodiment of the present invention.
FIGS. 7 through 10 illustrate power conversion devices according to various embodiments of the present invention.

### [Best Modes]

The following describes in detail a preferred embodiment of the present invention with reference to the attached drawings.

However, the technical concept of the present invention is not limited to the embodiments described herein but may be implemented in various different forms; provided that it falls within the scope of the technical concept of the present invention, one or more components from the embodiments may be selectively combined or substituted.

Furthermore, terms used in the embodiments of the present invention (including technical and scientific terms), unless explicitly defined otherwise, may be interpreted in the sense generally understood by a person skilled in the art to which the present invention pertains, and terms commonly used, such as those defined in dictionaries, may be interpreted in light of their contextual meaning in the relevant technical field.

Furthermore, the terms used in the embodiments of the present invention are intended to describe the embodiments and are not intended to limit the scope of the present invention.

In this specification, unless otherwise specified, the singular form may include the plural form, and a phrase such as "A and at least one of B and C" may include one or more of all possible combinations of A, B, and C.

Furthermore, in describing the components of the embodiments of the present invention, terms such as "first," "second," "A," "B," "(a)," and "(b)" may be used. These terms are intended solely to distinguish the component from other components and do not limit the nature, order, or sequence of the component.

Furthermore, when a component is described as being "connected," "coupled," or "joined" to another component, this may include not only cases where the component is directly "connected," "coupled," or "joined" to the other component, but also cases where the component is "connected," "coupled," or "joined" to the other component via another component situated between them.

Furthermore, when it is described that a component is formed or disposed "above" or "below" another component, "above" or "below" includes not only cases where the two components are in direct contact with each other, but also cases where one or more other components are formed or disposed between the two components. Furthermore, when expressed as "above" or "below," the meaning may include not only the upward direction but also the downward direction relative to a single component.

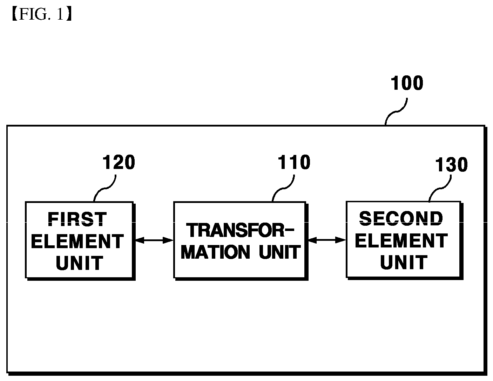

FIG. 1 illustrates a power conversion device according to an embodiment of the present invention. The power conversion device (100) according to an embodiment of the present invention may comprise a transformation unit (110), a first element unit (120), and a second element unit (130), as well as a first I/O (input/output) unit (141), a first full-bridge circuit unit (161), a second full-bridge circuit unit (162), a second I/O (input/output) unit (142), and a control unit (150).

The power conversion device (100) according to an embodiment of the present invention may be a power conversion device for an electric vehicle charging system. Here, the power conversion device (100) may be mounted in a power module of the electric vehicle charging system. The power module can receive AC power input from a grid (50/60 Hz) and convert it into DC power for charging an electric vehicle battery. Alternatively, it can receive DC power input from an energy storage system (ESS) and convert it into DC power for charging the battery. It can also receive power input from external power sources, such as solar power modules.

The power conversion device (100) according to an embodiment of the present invention may be a resonant converter, and may be a bidirectional LLC resonant converter or a bidirectional CLLLC resonant converter.

The transformation unit (110) converts power in both directions. The power transformation unit (110) includes a transformer and may include a primary side and a secondary side. It can convert power input to the primary side according to the turns ratio and output it to the secondary side, and it can convert power input to the secondary side according to the turns ratio and output it to the primary side.

The first element unit (120) is connected to one side of the transformation unit (110). The first element unit (120) can resonate the input power and transmit it to one side of the transformation unit (110). The first element unit (120) may include a first inductor (121), a first capacitor (122), and a first switching unit (123). The first inductor (121) and the first capacitor (122) form an LLC circuit together with the coil on one side of the transformation unit (110), enabling LLC resonance. The first inductor (121) is a resonant inductor, and the first capacitor (122) is a resonant capacitor. The first inductor (121) may be a magnetizing inductor.

The second element unit (130) is connected to the other side of the transformation unit (110). The second element unit (130) can resonate the input power and transmit it to the other side of the transformation unit (110). The second element unit (130) may include a second inductor (131), a second capacitor (132), and a second switching unit (133). The second inductor (131) and the second capacitor (132) may form an LLC circuit together with the coil on the other side of the transformation unit (110), enabling LLC resonance. The second inductor (131) may be a resonant inductor, and the second capacitor (132) may be a resonant capacitor. The second inductor (131) may be a magnetizing inductor.

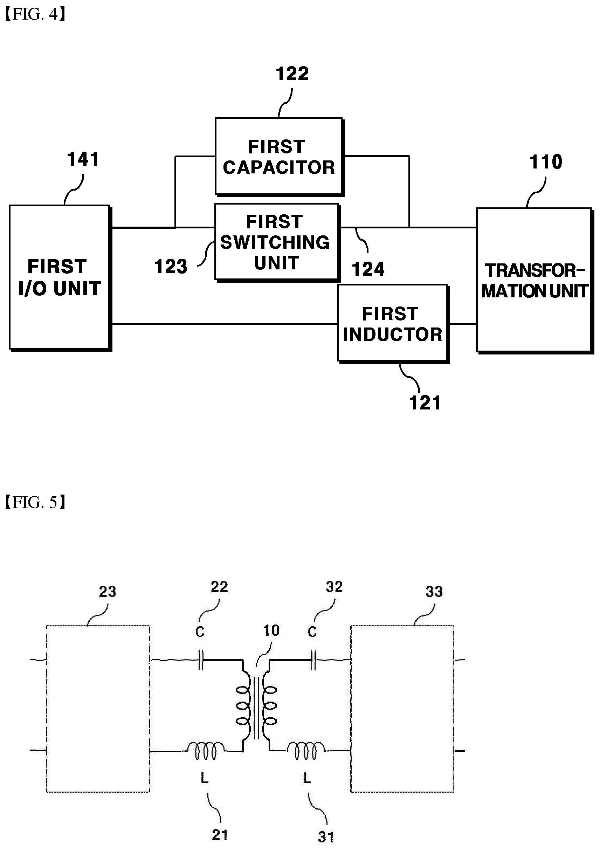

When power is converted from one side of the transformation unit (110) to the other, or from the other side to the one side, and both the first element unit (120) and the second element unit (130) are of the LLC type, the converter may take the form of a CLLLC converter. This may have the configuration shown in FIG. 5. It is configured with a first full-bridge circuit unit (23), a first resonant capacitor (22), a first resonant inductor (21), a transformer (10), a second resonant capacitor (32), a second resonant inductor (31), and a second full-bridge circuit unit (33), enabling CLLLC resonance. It is difficult to achieve a voltage gain of 1.3 or higher in a bidirectional CLLLC resonant converter under wide input/output range conditions. When designed to achieve a voltage gain of 1.3 times or more, a very large magnetizing current is required, which results in a higher saturation current level, a large amount of RMS current flowing in the primary side, and the problem of increased size of the transformer and resonant inductor components.

The power conversion device (100) according to an embodiment of the present invention may include a CLLLC configuration comprising a first element unit (120) and a second element unit (130), but it can operate as an LLC resonant converter depending on the operation of the first switching unit (123) and the second switching unit (133).

The first switching unit (123) may connect or disconnect the first capacitor (122), and the second switching unit (133) may connect or disconnect the second capacitor (132).

When the first switching unit (123) connects the first capacitor (122), the second switching unit (133) may disconnect the second capacitor (132). When the transformation unit (110) converts power from one side to the other, the first switching unit (123) connects the first capacitor (122), and the second switching unit (133) can disconnect the second capacitor (132). Through this, on one side, the first inductor (121) and the first capacitor (122) form an LLC resonant circuit together with the coil on that side of the transformation unit (110), while on the other side, the second capacitor (132) is disconnected to prevent resonance from occurring on the output side.

Conversely, when the second switching unit (133) connects the second capacitor (132), the first switching unit (123) can disconnect the first capacitor (122). When the transformation unit (110) converts power from the opposite side to one side, the second switching unit (133) connects the second capacitor (132), and the first switching unit (123) can disconnect the first capacitor (122). Through this, on the other side, the second inductor (131) and the second capacitor (132) form an LLC resonant circuit together with the coil on the other side of the transformer unit (110), while on the one side, the connection of the first capacitor (122) is disconnected to prevent resonance from occurring on the output side (the one side).

This allows the circuit to operate as a bidirectional LLC resonant converter.

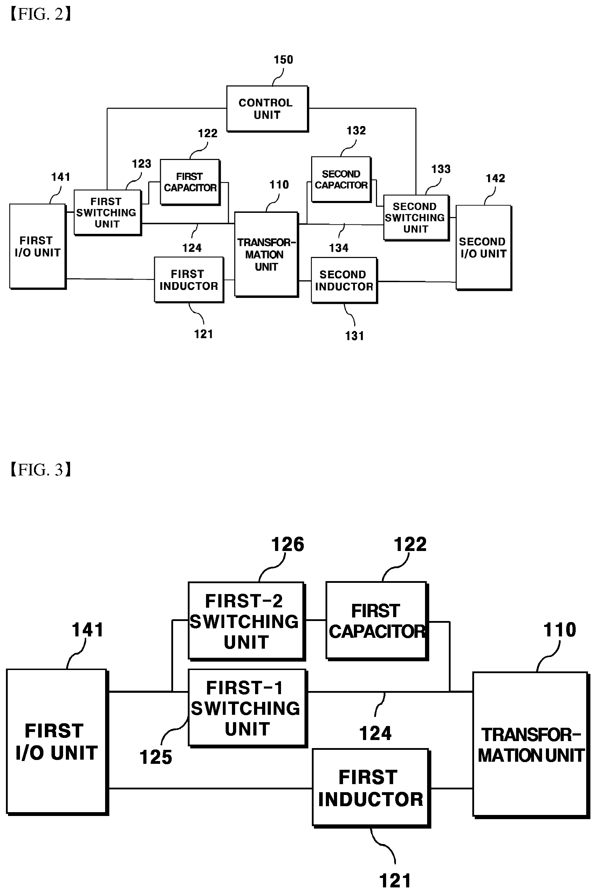

The first switching unit (123) can connect either the first capacitor (122) or the first bypass path (124), which bypasses the first capacitor (122). The first switching unit (123) operates such that the first capacitor (122) is connected to the input side when one side is the input side, and can bypass the first capacitor (122) when one side is the output side. As shown in FIG. 2, when power is input through the first I/O unit (141), the first switching unit (123) connects the first capacitor (122), and when power is output through the first I/O unit (141), the first switching unit (123) disconnects the first capacitor (122) and can form the first bypass path (124).

The second switching unit (133) can connect either the second capacitor (132) or the second bypass path (134), which bypasses the second capacitor (132). The second switching unit (133) operates such that the second capacitor (132) is connected to the input side when the other side is the input side, and can bypass the second capacitor (132) when the other side is the output side. As shown in FIG. 2, when power is input through the second I/O unit (142), the second switching unit (133) connects the second capacitor (132), and when power is output through the second I/O unit (142), the second switching unit (133) disconnects the second capacitor (132), forming a second bypass path (134).

The control unit (150) can control the operation of the first switching unit (123) and the second switching unit (133). By measuring the voltage, current, and power of the first I/O unit (141) and the second I/O unit (142), determining the input/output direction, or controlling the first switching unit (123) and the second switching unit (133) according to commands received from an external source, a unidirectional LLC resonant converter can be configured. The control unit (150) may be an MCU.

The first inductor (121) may be connected to the (-) terminal on one side of the transformer (110), and the second inductor (131) may be connected to the (-) terminal on the other side of the transformation unit (110). The LLC resonant circuit is configured by the connection of the first capacitor (122) and the second capacitor (132), and the first inductor

(121) and the second inductor (131) may be connected to the (-) terminals on both sides of the transformation unit (110), respectively. Alternatively, the first switching unit (123) may connect or disconnect the first inductor (121), and the second switching unit (133) may connect or disconnect the second inductor (131).

The first switching unit (123) and the first capacitor (122) of the first element unit (120) may be connected to the transformation unit (110) in various embodiments. Various embodiments will be described below.

The first element unit (120) may include a first bypass path (124) connected at one end to the (+) terminal on one side of the transformation unit (110), and the first capacitor (122) may have one end connected to the (+) terminal on one side of the transformation unit (110), and connected in parallel with the first bypass path (124), and the first switching unit (123) may have one end connected to either the other end of the first bypass path (124) or the other end of the first capacitor (122), and the other end connected to the first input/output unit (141). As shown in FIG. 2, the first capacitor (122) and the first bypass path (124) are connected in parallel to one side of the transformation unit (110), and the first switching unit (123) may be connected to one of them to form a path.

The first element unit (120) may include a first bypass path (124) connected at one end to the (+) terminal on one side of the transformation unit (110), and the first capacitor (122) may be connected at one end to a tap terminal located between the (+) and (-) terminals on one side of the transformation unit (110). Here, the tap terminal is a terminal formed by branching the winding of the transformation unit (110) at its midpoint, and the first capacitor (122) may be connected to the tap terminal. The first switching unit (123) may have one end connected to either the other end of the first bypass path (124) or the other end of the first capacitor (122), and the other end connected to the first input/output unit (141). When the first capacitor (122) is connected, it connects to one side of the transformation unit (110) via the tap terminal of the transformation unit (110); as a result, the number of turns in the input-side winding decreases depending on the branching position of the tap terminal, which can increase the turns ratio. In this case, when power is applied to the other side of the transformation unit (110), the first capacitor (122) is not connected, and the first bypass path (124) is connected; in this case, all windings of the transformation unit (110) are connected, so the winding ratio may vary depending on the direction of power conversion. Through this, the turns ratio may be configured differently for the forward and backward directions to optimize the voltage gain.

The first element unit (120) may include a first bypass path (124) having one end connected to a tap terminal between the (+) terminal and the (-) terminal on one side of the transformation unit (110), and a first capacitor (122) having one end connected to the (+) terminal on one side of the transformation unit (110), the first switching unit (123) may have one end connected to either the other end of the first bypass path (124) or the other end of the first capacitor (122), and the other end connected to the first input/output unit (141). In this case, when the first capacitor (122) is connected, it is connected to one side of the transformation unit (110) through the entire winding of the transformation unit (110), and, however, when power is applied to the other side of the transformation unit (110), the first capacitor (122) is not connected, the first bypass path (124) is connected, reducing the number of turns in the output-side winding depending on the tap terminal's branching position, which can result in a smaller turns ratio. In other words, the turns ratio may vary depending on the direction of power conversion.

The first element unit (120) may include a first bypass path (124) having one end connected to the (+) terminal on one side of the transformation unit (110), and the first capacitor (122) may have one end connected to a tap terminal between the (+) and (-) terminals on one side of the transformation unit (110), the first switching unit (123) may include a first-1 switching unit (125), one end of which is connected to the other end of the first bypass path (124), and a first-2 switching unit (126), one end of which is connected to the other end of the first capacitor (122) and connected in parallel with the first-1 switching unit (125). The first capacitor (122) is connected to a tap terminal, allowing the turns ratio to vary depending on the input/output direction. The first switching unit (123) may be configured, as shown in FIG. 3, with a first-1 switching unit (125) and a first-2 switching unit (126).

When the first switching unit (123) is connected to either the first capacitor (122) or the first bypass path (124), as shown in FIG. 2, the first switching unit (123) may be configured as a relay, which is a circuit with changing contacts. As shown in FIG. 3, when the first switching unit (123) includes a first-1 switching unit (125) and a first-2 switching unit (126), the first-1 switching unit (125) and the first-2 switching unit (126) operate in an on-off manner; therefore, they may be configured not only as relays but also as semiconductor switches such as MOSFETs. In addition, various other switching devices may be included.

The first element unit (120) may include a first bypass path (124) having one end connected to a tap terminal between the (+) terminal and the (-) terminal on the one side of the transformation unit (110), and the first capacitor (122) may have one end connected to the (+) terminal on the one side of the transformation unit (110), The first switching unit (123) may include a first-1 switching unit (125), one end of which is connected to the other end of the first bypass path (124), and a first-2 switching unit (126), one end of which is connected to the other end of the first capacitor (122) and is connected in parallel with the first-1 switching unit (125). The first bypass path (124) is connected to a tap terminal, allowing the turns ratio to vary depending on the input/output direction. As shown in FIG. 3, the first switching unit (123) may be configured with a first-1 switching unit (125) and a first-2 switching unit (126).

The first capacitor (122) may have one end connected to the (+) terminal on one side of the transformation unit (110) and the other end connected to the first input/output unit (141), the first switching unit (123) may have one end connected to the (+) terminal on the one side of the transformation unit (110), the other end connected to the first input/output unit (141), and may be connected in parallel with the first capacitor (122). As shown in FIG. 4, the first switching unit (123) can form a bypass path without a separate first bypass path (124) connected in parallel with the first capacitor (122). When the first switching unit (123) is turned on to form a bypass path, the first capacitor (122), which is connected in parallel with the first switching unit (123), does not operate; thus, the circuit may be configured as if the first capacitor (122) were not connected.

The second switching unit (133) and the second capacitor (132) of the second element unit (130) may be connected to the transformation unit (110) in various embodiments. The configuration of the second element unit (130) may be configured to correspond to one of the configurations of the first element unit (120) described in the various embodiments above.

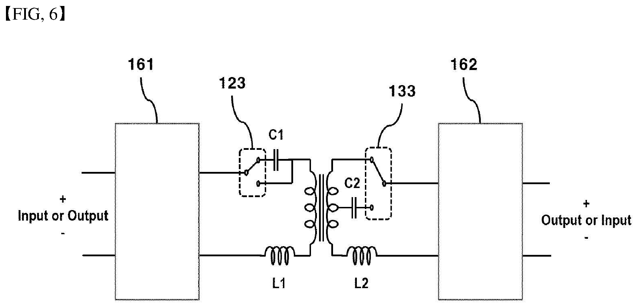

At this time, the configuration of the second element unit (130) may correspond to that of the first element unit (120) or may be configured according to a different embodiment of the first element unit (120). As shown in FIG. 6, the first element unit (120) may include a first bypass path (124) having one end connected to the (+) terminal on one side of the transformation unit (110), and the first capacitor (122) may have one end connected to the (+) terminal on one side of the transformation unit (110), and connected in parallel with the first bypass path (124), and the first switching unit (123) may have one end connected to either the other end of the first bypass path (124) or the other end of the first capacitor (122), and the other end connected to the first input/output unit (141). The second element unit (130) may include a second bypass path (134) having one end connected to the (+) terminal on the other side of the transformer unit (110), and the second capacitor (132) may have one end connected to a tap terminal between the (+) and (-) terminals on the other side of the transformer unit (110), the second switching unit (133) may have one end connected to either the other end of the second bypass path (134) or the other end of the second capacitor (132), and the other end connected to the second input/output unit (142). The first input/output unit (141) may be connected to the first full-bridge circuit unit (161), and the second input/output unit (142) may be connected to the second full-bridge circuit unit (162). The first full-bridge circuit unit (161) and the second full-bridge circuit unit (162) are configured as full bridges and can supply power to the first element unit (120) or the second element unit (130), which form an LLC resonant section through switching operations.

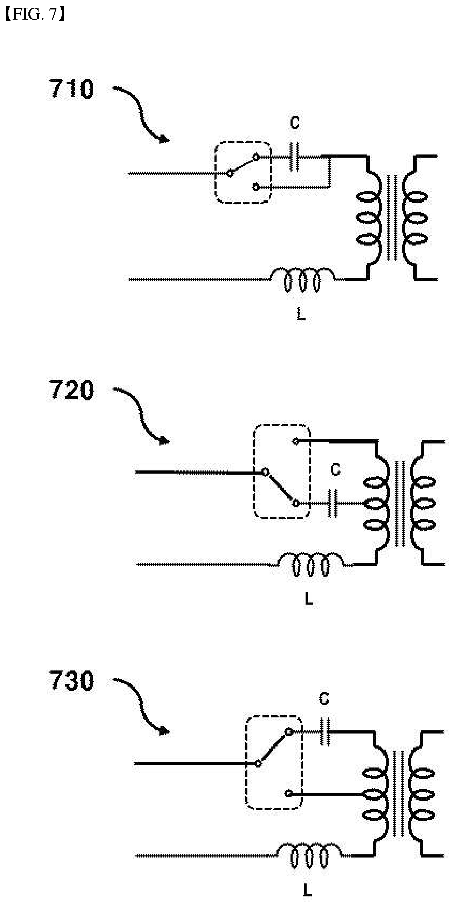

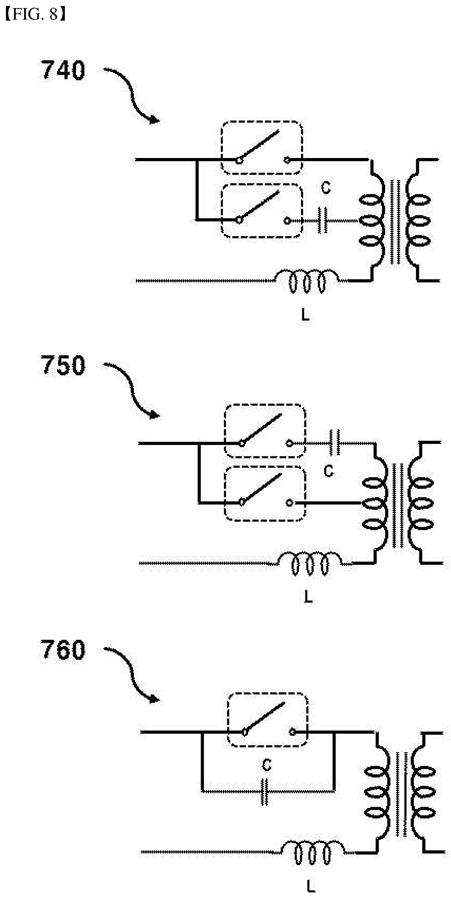

As described above, the first element unit (120) includes the connection relationship between the first capacitor (122) and the first bypass path (124), the connection relationship between the first capacitor (122) or the first bypass path (124) and the transformer unit (110), the connection between the first capacitor (122) or the first bypass path (124) and the first switching unit (123), and the type and number of first switching units (123). Depending on these factors, it can be configured in various embodiments, as shown in FIGS. 7 and 8.

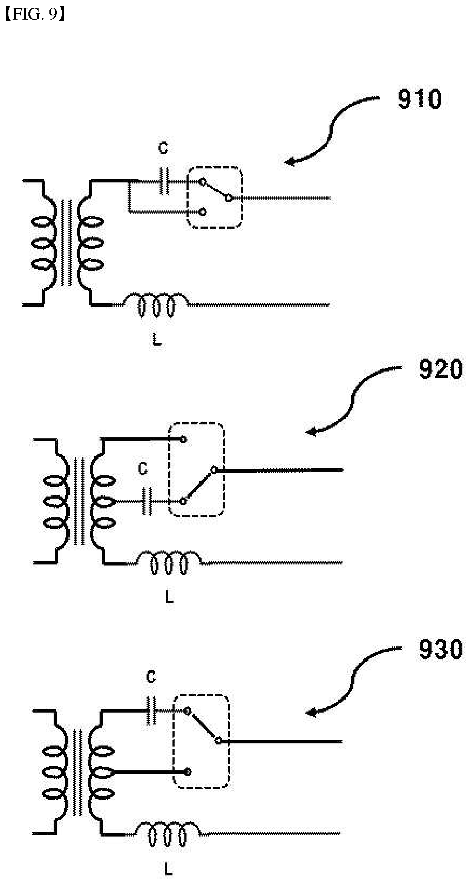

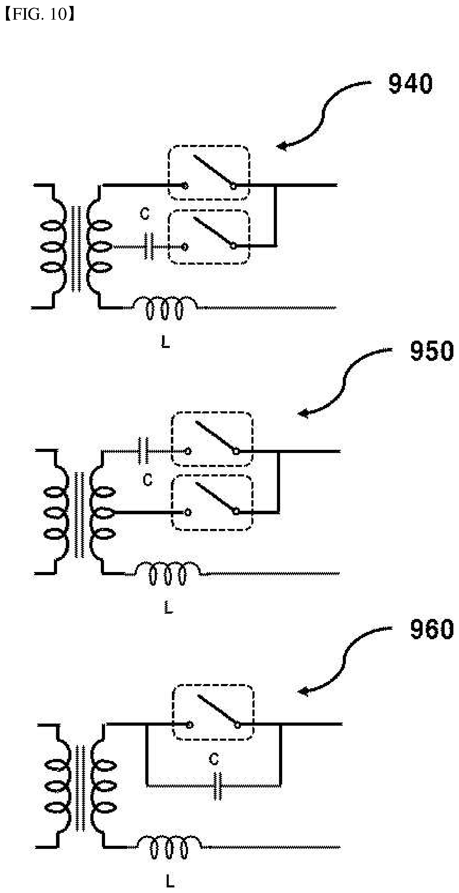

Similarly, the second element unit (130) corresponds to the first element unit (120) in terms of the connection relationship between the second capacitor (132) and the second bypass path (134), the connection relationship between the second capacitor (132) or the second bypass path (134) and the transformation unit (110), the connection relationship between the second capacitor (132) or the second bypass path (134) and the second switching unit (133), and depending on the type and number of second switching units (133), it may be configured in various embodiments as shown in FIGS. 9 and 10.

The power conversion device (100) according to an embodiment of the present invention can configure a bidirectional LLC converter through a combination of a first element unit (120) from one of the embodiments shown in FIGS. 7 and 8 and a second element unit (130) from one of the embodiments shown in FIGS. 9 and 10. For example, the power conversion device (100) may be configured from any one combinations of 710+910, 710+920, 710+930, 710+940, 710+950, 710+960, 720+910, 720+920, 720+930, 720+940, 720+950, 720+960, 730+910, 730+920, 730+930, 730+940, 730+950, 730+960, 740+910, 740+920, 740+930, 740+940, 740+950, 740+960, 750+910, 750+920, 750+930, 750+940, 750+950, 750+960, 760+910, 760+920, 760+930, 760+940, 760+950, 760+960.

As described above, a bidirectional LLC converter can be implemented by connecting only one of the resonant capacitors-the first capacitor (122) or the second capacitor (132)-depending on the power conversion direction. In other words, the circuit can be switched to a bidirectional LLC converter by using a relay or semiconductor switch to open or short-circuit the resonant capacitor (C), and voltage gain can be increased by removing one of the two resonant capacitors. Additionally, by adding a terminal in the middle of the transformer winding and using a relay or semiconductor switch device, the transformer's turns ratio can be adjusted according to the operating mode. Through this, the turns ratios for the forward and backward directions can be configured differently to optimize the voltage gain. By configuring the relay or semiconductor switching device to form an LLC circuit according to the direction of power transfer, an optimized bidirectional LLC can be designed. Furthermore, the bidirectional DC-DC converter can be configured to minimize the size and losses of magnetic components (transformers and inductors).

When the proposed circuit is applied under the same circuit parameter conditions, the voltage gain is higher than that of conventional CLLLCs, enabling designs that satisfy a wide range of input and output conditions and this also suppresses the excessively high magnetizing current that would otherwise be required to accommodate a wide input and output voltage range. Since the circuit can be designed to minimize magnetizing current under the same power conditions, the size and losses of the magnetic components can be minimized, thereby enabling the miniaturization of bidirectional DC-DC converters and the achievement of high efficiency.

A person skilled in the art related to the present embodiment will understand that the invention may be implemented in various modified forms without departing from the essential characteristics of the above description. Therefore, the disclosed methods should be considered in an illustrative rather than a limiting sense. The scope of the present invention is defined by the claims rather than the foregoing description, and all variations falling within the scope of the claims should be considered included in the present invention.

## Claims

1. A power conversion device, comprising:
a transformation unit configured to convert power in both directions;
a first element unit connected to one side of the transformation unit; and
a second element unit connected to the other side of the transformation unit,
wherein the first element unit comprises a first inductor, a first capacitor, and a first switching unit which connects or disconnects the first capacitor, and
wherein the second element unit comprises a second inductor, a second capacitor, and a second switching unit which connects or disconnects the second capacitor.

2. The power conversion device of claim 1, wherein when the first switching unit connects the first capacitor, the second switching unit disconnects the second capacitor.

3. The power conversion device of claim 1, wherein the first switching unit connects either the first capacitor or a first bypass path that bypasses the first capacitor.

4. The power conversion device of claim 1, wherein the second switching unit connects either the second capacitor or a second bypass path that bypasses the second capacitor.

5. The power conversion device of claim 1, wherein, when the transformation unit converts power from the one side to the other side direction, the first switching unit connects the first capacitor, and the second switching unit disconnects the second capacitor.

6. The power conversion device of claim 1, wherein, when the transformation unit converts power from the other side to the one side direction, the first switching unit disconnects the first capacitor, and the second switching unit connects the second capacitor.

7. The power conversion device of claim 1, wherein the first inductor is connected to a (-) terminal on the one side of the transformation unit, and the second inductor is connected to a (-) terminal on the other side of the transformation unit.

8. The power conversion device of claim 1, wherein the first element unit comprises a first bypass path having one end connected to a (+) terminal on one side of the transformation unit,
wherein the first capacitor has one end connected to a (+) terminal on one side of the transformation unit and is connected in parallel with the first bypass path, and
wherein the first switching unit has one end connected to either the other end of the first bypass path or the other end of the first capacitor, and the other end is connected to the first input/output unit.

9. The power conversion device of claim 1, wherein the first element unit comprises a first bypass path, one end of which is connected to a (+) terminal on one side of the transformation unit,
wherein the first capacitor has one end connected to a tap terminal between the (+) and (-) terminals on the one side of the transformation unit, and
wherein the first switching unit has one end connected to either the other end of the first bypass path or the other end of the first capacitor, and the other end is connected to the first input/output unit.

10. The power conversion device of claim 1, wherein the first element unit comprises a first bypass path, one end of which is connected to a tap terminal between the (+) terminal and the (-) terminal on one side of the transformation unit,
wherein the first capacitor is connected at one end to the (+) terminal on one side of the transformation unit, and
wherein the first switching unit has one end connected to either the other end of the first bypass path or the other end of the first capacitor, and the other end is connected to the first input/output unit.
